# EUROPEAN PATENT APPLICATION

(11) **EP 2 055 796 A2**
(43) Date of publication of application: **06.05.2009**
(21) Application number: 08167810.4
(22) Date of filing: 29.10.2008
(51) Int. Cl.: C22C 29/08

(54) **Method for making cemented carbide components**

(30) Priority: 01.11.2007 SE 0702410
(71) Applicant: Seco Tools AB, 737 82 Fagersta (SE)
(72) Inventor: Laarz, Eric, 724 78 Västerås (SE); Puide, Mattias, SE 722 20 Västerås (SE)
(74) Representative: Hägglöf, Henrik

(57) **Abstract**

The present invention relates to a method for dispersing a powder mixture of metal carbide and cobalt powders in an apolar medium with a dispersant and possibly a wetting agent. According to the invention, the dispersant is an effective dispersant for both cobalt- and metal carbide surfaces. The invention is particularly useful for powder mixtures with a fine grained cobalt powder and a relatively high cobalt content. The dispersant used is an amphiphilic compound with a branched copolymer structure.

## Description

### Field of the invention

This invention relates to the production of cemented carbide components via a powder metallurgy route and to a process of preparing homogeneous, well-dispersed multi-component compositions comprising particulate solids, a liquid processing medium, and organic additives such as wetting and dispersing agents.

### Background of the invention

Cemented carbides based on tungsten carbide are composites consisting of small (µm-scale) grains of at least one hard phase in a binder phase. In these materials, the hard phase tungsten carbide (WC) is always present. In addition, other metal carbides with a general composition (Ti,Nb,Ta,W)C may also be included, as well as metal carbonitrides, e.g., Ti(C,N). The binder phase usually consists of cobalt (Co). Other binder phase compositions may also be used, e.g., combinations of Co, Ni, and Fe, or Ni and Fe.

Cemented carbide components are usually manufactured using a powder metallurgy process. The WC and Co powders and any additional inorganic powders are mixed with a liquid phase to obtain a fluid composite material with a low viscosity. Mixing of the fluid composite material is carried out to achieve the desired homogeneous distribution of all constituents in the material. The mixing may be combined with milling operations to control carbide grain size distribution and grain morphology. Depending on desired material properties and component shape different processing routes and shaping methods can be employed, the most common ones being dry pressing of spray dried granular powders, extrusion and powder injection molding of a particulate feedstock containing an organic binder phase.

Spray drying of tungsten carbide based cemented carbides requires the manufacture of a powder slurry consisting of appropriate proportions of inorganic raw materials, organic additives and a liquid dispersion medium. The liquid is often an alcohol, e.g., ethanol or water or a mixture thereof. The slurry is usually milled in a suitable mill with the purpose of deagglomerating and mixing the raw materials intimately. Individual raw material grains are also disintegrated to some extent during milling. The obtained slurry is then dried and granulated in a spray drier. The free-flowing granular powder thus obtained may then be used in dry pressing of green bodies, generally with PEG (polyethylene glycol) added as a pressing aid. Alternatively, stearic acid is added when the spray dried powder is used for the production of extrusion or injection molding feedstock.

Injection moulding is common in the plastics industry, where feedstock material containing thermoplastic or thermosetting binders are heated and forced into a mold with the desired shape. The method is often referred to as Powder Injection Molding (PIM) when applied in powder technology. The powder injection molding method is expensive compared to uniaxial pressing and is hence preferably used for parts with a complex geometry.

When using a powder metallurgy approach for production of cemented carbide components it is of utmost importance for the manufacture of reliable components to be able to control all of the steps in the production process. For optimum performance and high reliability of the components, the components produced by a powder metallurgy route should have a microstructure characterized by a small defect size, other phases well dispersed and a homogeneous grain boundary composition. One of the problems limiting the development of materials with these characteristics relates to the difficulty of achieving a good mix of two or more particulate materials to obtain homogeneous composite mixtures. Since fine powders are cohesive and thus difficult to mix in the dry state, they are mixed with a liquid medium which greatly facilitates homogenization and processing. Typically, the particulate components are mixed with a liquid medium, a suitable dispersant, and possibly further additives so that a well dispersed, non-agglomerated and fluid composite material can be made. The dispersant is a crucial component in the mixing process as it allows the preparation of fluid composite materials with low viscosities and homogeneous dispersion of the inorganic particulates. Examples of fluid multi-component materials common in cemented carbide production are particulate slurries for spray drying and feedstock for extrusion and injection molding.

Generally the liquid dispersion medium used in the mixing process is a sacrificial component which has to be removed from the component after the mixing and homogenization process. The liquid phase may comprise aqueous or organic solvents or mixtures thereof, or it can be a thermoplastic organic polymer which is processed at elevated temperatures in the liquid state but solidifies when cooled to ambient temperature. The removal of the dispersion medium can be achieved with different techniques depending on the material characteristics. Aqueous liquids and organic solvents are usually removed by spray drying or other drying processes while higher molecular weight materials such as thermoplastic polymers and waxes are removed after solidification either by pyrolysis in a furnace or by extraction with a solvent. Spray-drying of slurries containing soluble organic binder systems produces a free-flowing granulated powder with granules consisting of inorganic particles and the organic binder. The spray-dried granulated powder is usually dry-pressed to obtain cohesive cemented carbide bodies with a desired shape. In the case of injection molding or extrusion processes the high molecular weight organics in the composite feedstock material are removed after the shaping operation by means of a pyrolysis or solvent extraction process.

The homogeneity of the component microstructure after shaping is to a large extent dependent on the degree of homogeneity that can be achieved in the mixing process and less dependent on the shaping method. This also means that inhomogeneities introduced in the mixing process are difficult or impossible to remove in subsequent processing steps. The presence of inhomogeneities will lead to a variety of material flaws that are almost always detrimental to the component performance. Pores, cracks and shape distortions are examples of material flaws in cemented carbide components that can be traced back to poor mixing and dispersion.

The viscosity of the particulate slurry or feedstock is one of the controlling parameters in cemented carbide processing via spray drying, extrusion and injection molding. It is preferred that the slurry or feedstock should display a low viscosity at the appropriate shear rates. In the case of spray drying, slurry viscosity has a profound influence on the morphology and the granule size distribution of the spray dried powder. In the case of injection molding, a lower feedstock viscosity improves form filling performance and makes it possible to work at lower injection pressures, which has the benefit of reduced wear of the shaping tool.

Methods to disperse cemented carbide powders in polar aqueous and ethanolic media for the production of cemented carbide slurries and spray-dried granular powders have been described in several publications. The article "Dispersing WC-Co powders in aqueous media with polyethylenimine" (E Laarz and L Bergström, International Journal of Refractory Metals & Hard Materials, 18, 2000, p 281-286) gives an account of PEI (polyethylenimine, a cationic polyelectrolyte) in slurries of tungsten carbide and cobalt in water. PEI acts as a dispersant at concentrations above 0.3 % with respect to dry powder weight (wt-%). EP-A-1153652 relates also to the preparation of dispersed suspensions of WC and Co in water or water-ethanol mixtures using PEI. In water based slurries with 3.5 wt-% PEG present, a dispersing effect of PEI was reported at concentrations above 0.3 wt-%. For mixtures of water and ethanol, the lowest concentration of PEI stated to have dispersing effect is 0.3 wt-%. The slurry is made from a mixture of 90 wt-% ethanol and 10 wt-% water with WC, TiC, TaC, TiN, and Co powders. A concentration range of a polyethylenimine-based polyelectrolyte of 0.1-10 wt-% is claimed.

EP 1426456 relates to the addition of even lower concentrations of PEI (0.01-<0.1 wt-%) to slurries containing ethanol, water, PEG, and powdered raw materials for the production of tungsten carbide based hard metals. A radical decrease in slurry viscosity is thus obtained, which can be used to decrease the volume of milling liquid, the milling time, the rinsing liquid volume, and energy use on slurry drying. A concentration range of 0.01-<0.1 wt-% of a polyethylenimine-based polyelectrolyte is claimed.

EP 1440956 discloses an economic and environment-friendly preparation, handling, and spray drying of slurries for the production of tungsten carbide based hard metals. The slurry is ethanol-water based and contains metallic and metal carbide raw materials as well as polyethylene glycol (PEG) and a very low concentration of polyethylenimine (PEI). The concentration of PEI is 0.01 - <0.1 % of the raw material weight. As a result, low-viscous slurries are produced which require less use of ethanol, energy, manpower and equipment time in their preparation, handling, and spray drying. EP 1486579 is closely related and discloses a method for environment-friendly and economic preparation, handling, and spray drying of slurries for the production of titanium based carbonitride alloys.

It is common practice in the plastics industry to use fatty acids to disperse mineral fillers in polymer feedstock for extrusion and injection molding. This approach has been adopted by the cemented carbide industry in order to disperse cemented carbide powders in apolar media. Thus, fatty acids such as stearic acid are the current standard for mixing and dispersing cemented carbide powders in the apolar media used in the production of powder injection molding feedstock. Fatty acids are effective dispersants for WC powder but not as effective for Co powder.

Problem to be solved

The higher the amount of cobalt surface area per unit volume of the apolar binder phase in a feedstock material, the more difficult it is to achieve a sufficiently low feedstock viscosity with the commonly used fatty acid dispersants. Certain feedstock compositions with very high Co contents or very fine Co particles cannot be used for cemented carbide production because their viscosity is too high. Poor form filling and excessive shaping tool wear are the main problems that occur when processing these feedstocks with extrusion or injection molding techniques.

It is an object of the present invention to produce feedstock materials with increased cobalt surface area per unit volume of feedstock material which have acceptable processing properties, i.e. a sufficiently low feedstock viscosity.

### Summary of the invention

It has now surprisingly been found that using a polymeric amphiphilic dispersant, namely 2-pyrrolidinone, 1-ethenyl-, polymer with 1-triacontene, in formulations for dispersions of cemented carbide powder mixtures in apolar media that the obtained injection molding feedstock is characterized by a lower viscosity as compared to feedstock made with conventional fatty acid dispersants. By comparing the effect of the polymeric dispersant on feedstock viscosity with conventional fatty acid dispersants it was found that the achieved relative viscosity reduction was getting larger with increasing cobalt surface area per unit volume feedstock material. In addition, it has been found that the processing time for mixing of the components is reduced by using a combination of the above dispersant and a wetting agent, namely 1-octyl-2-pyrrolidone.

The present invention provides a procedure for making well dispersed multi-component materials with a low viscosity comprising tungsten carbide-based inorganic powder mixtures, an apolar dispersion medium, and low amounts of organic dispersing and wetting agents. The invented low-viscous multi-component formulations are suitable for the preparation of starting materials for all processing routes used for the production of cemented carbide components that rely on the dispersion of WC-based inorganic powder mixtures in an apolar medium. This group of processing routes includes extrusion, powder injection molding and methods to make spherical, free flowing granules comprising particulate inorganic phases and an apolar binder material.

The procedure involves mixing the powders, based on mixtures of WC and Co with additional constituents suitable for making cemented carbides, with an apolar liquid medium, and an organic dispersant or a combination of organic dispersant and wetting agent to achieve a well-dispersed slurry or feedstock that can be further processed by extrusion, injection molding or methods to produce free-flowing granular powders.

Compared to tungsten carbide based feedstock materials commonly used for powder injection molding of cemented carbide components the said multi-component materials are characterized by a lower viscosity which provides better form filling and reduced wear of the shaping tool.

According to a preferred embodiment the WC+Co-based materials can be used to produce inserts for metal cutting tools.

### Detailed description of the preferred embodiments

The present invention relates to a method for formulating and processing dispersions of cemented carbide powder mixtures in apolar media. Further, the invention provides a method for making homogeneous powder bodies by different types of powder processing techniques, including extrusion, injection molding and dry pressing of free-flowing ready-to-press powder. Specifically, the invention provides a method to produce cemented carbide inserts for metal cutting tools.

More specifically the invention relates to the preparation of dispersions of tungsten carbide based powder mixtures in at least one apolar processing liquid with the aid of low amounts of suitable dispersing and wetting agents, thus obtaining a composite material characterized by a low viscosity. The composite materials can be used to produce intermediate products such as a free flowing powder for dry pressing or, preferably, feedstock for extrusion and injection molding. The feedstock can be prepared by mixing a conventional spray-dried cemented carbide powder containing additions of the dispersing agent with a high-molecular weight thermoplastic binder at temperatures above the melting range of the organic binder, or, preferably, by blending the tungsten carbide based powder mixtures directly with a high-molecular weight organic binder and the dispersing and wetting agents at temperatures above the binder melting range. The extruded or injection molded components are then subjected to a debindering treatment by pyrolysis at high temperatures or by solvent extraction.

By suitable organic dispersing agent (i.e. dispersant) we mean polymeric amphiphilic compounds. The dispersant molecular weight is in the range 400 - 50000 g/mol, preferably in the range 1000 - 20000 g/mol. For the dispersant to be effective a sufficiently high solubility in apolar media and the presence of both polar functional groups and apolar moieties are required. Suitable dispersants are linear and branched blockcopolymers comprising hydrophilic and hydrophobic blocks of suitable length, and, preferably, branched copolymers comprising amphiphilic repeating units with grafted hydrophobic alkyl moieties. The preferred polymeric dispersants with a branched copolymer architecture are alkylated polyvinylpyrrolidones with grafted α-olefin moieties. The length of the grafted α-olefin moieties is C8 or longer, but preferably in the range C22-C40.

By suitable organic wetting agent we mean low-molecular weight amphiphilic compounds with a molecular weight of 150 - 400 g/mol, preferably in the range 180 - 250 g/mol.

By low amounts of organic dispersing and wetting agents we mean concentrations of 0.01 - 2 wt-% relative to the inorganic solids weight. Preferred added amounts are in the range 0.3 - 0.8 wt-% for an inorganic powder mixture comprising Co powder with an FSSS size of about 0.8 µm. When using Co powders with larger or smaller FSSS sizes the preferred amounts of dispersant have to be adjusted correspondingly, which is a procedure well known to those skilled in the art.

By apolar medium we mean organic compounds that are fluids at the processing temperatures used and that have a low polarity compared to polar media such as aqueous or alcoholic processing liquids. Low molecular weight apolar media such as n-hexane are preferably used for spray drying of particulate slurries. High molecular weight apolar compounds are preferably used for extrusion and injection molding. Examples of high molecular weight apolar media are waxes, such as paraffin and Fischer Tropsch waxes, and synthetic thermoplastic polymers such as low density polyethylene, or mixtures thereof.

Dispersions of metal carbide and cobalt powder mixtures in an apolar medium can be prepared for further processing with either spray-drying or extrusion and injection molding techniques.

The invention can be used for all WC and Co grain sizes commonly used. However, it has particular usefulness for dispersions containing more than 9 wt-% cobalt and dispersions containing cobalt powder with FSSS grain sizes equal or less than 2 µm, preferably less than 1 µm. The inorganic powder mixtures used for said dispersions contain WC and Co with additions of less than 1-15 wt-% TaC, NbC, TiC and/or Ti(C,N) in total of the raw material weight. In addition, small amounts of tungsten metal or carbon black may be included in order to adjust the carbon balance in the sintered material.

Other compounds than the above mentioned may also be used as raw materials. In one preferred embodiment, zirconium carbide and/or hafnium carbide may be included.

In addition to the above mentioned hard phases, small amounts, i.e., less than 1 wt-%, of chromium carbide and/or vanadium carbide may be added in order to inhibit grain growth during sintering.

### Example 1 (comparative)

A WC-13 wt-% Co submicron cemented carbide powder was made by wet milling 390 g Co-powder (OMG extra fine), 19,33 g Cr₃C₂ (H C Starck), 2580.5 g WC (H C Starck DS80), 10,22 g W metal powder and 21 g stearic acid in 0,8 1 milling liquid consisting of ethanol and water (80:20 by weight) for 40 h. The resulting slurry was spraydried to a granulated powder. Stearic acid was added in this stage of the process to work as a granule forming agent, when spray drying the slurry. When the granulated powder is subsequently used for the manufacture of injection molding feedstock as described in Example 6, the included stearic acid will act as a dispersant for the inorganic powder mixture in the apolar organic binder of the feedstock.

### Example 2 (invention)

A WC-13 wt-% Co submicron cemented carbide powder was made by wet milling 390 g Co-powder (OMG extra fine), 19,33 g Cr₃C₂ (H C Starck), 2580.5 g WC (H C Starck DS80), 10,22 g W metal powder, 14,6 g 2-pyrrolidinone, 1-ethenyl-, polymer with 1-triacontene (Antaron WP660, M_{w}≈7000, from International Specialty Products Inc.) and 11,3 g Fischer-Tropsch wax in 0,8 1 milling liquid consisting of ethanol and water (80:20 by weight) for 40 h. The resulting slurry was spraydried to a granulated powder. Dispersant and Fischer-Tropsch wax were added in this stage of the process to work as a granule forming agent, when spray drying the slurry. When the granulated powder is subsequently used for the manufacture of injection molding feedstock as described in Example 7, the included Antaron WP660 will act as a dispersant for the inorganic powder mixture in the apolar organic binder of the feedstock.

### Example 3 (Invention)

A WC-13 wt-% Co submicron cemented carbide powder was made by wet milling 390 g Co-powder (OMG extra fine), 19,33 g Cr3C2 (H C Starck), 2580.5 g WC (H C Starck DS80), 10,22 g W metal powder, 14,6 g 2-pyrrolidinone, 1-ethenyl-, polymer with 1-triacontene (Antaron WP660 dispersant, M_{w}≈7000, from International Specialty Products Inc)., 300 mg 1-octyl-2-pyrrolidone (EasyWet 20 from International Specialty Products Inc.), 11,3 g Fischer-Tropsch wax and in 0,8 1 milling liquid consisting of ethanol and water (80:20 by weight) for 40h. The resulting slurry was spraydried to a granulated powder. The dispersant, wetting agent and Fischer-Tropsch wax were added in this stage of the process to work as a granule forming agent, when spray drying the slurry. When the granulated powder is subsequently used for the manufacture of injection molding feedstock as described in Example 8, the included Antaron WP660 and EasyWet 20 will act as dispersant and wetting agent, respectively, for the inorganic powder mixture in the apolar organic binder of the feedstock.

### Example 4 (comparative)

A WC-13 wt-% Co submicron cemented carbide powder was made by wet milling 390 g Co-powder (Umicore Halfmicron), 19,33 g Cr3C2 (H C Starck), 2580.5 g WC (H C Starck DS80), 10,22 g W metal powder and 21 g stearic acid in 0,8 1 milling liquid consisting of ethanol and water (80:20 by weight) for 40 h. The resulting slurry was spraydried to a granulated powder. The stearic acid was added in this stage of the process to work as a granule forming agent, when spray drying the slurry. When the granulated powder is subsequently used for the manufacture of injection molding feedstock as described in Example 9, the included stearic acid will act as a dispersant for the inorganic powder mixture in the apolar organic binder of the feedstock.

### Example 5 (invention)

A WC-13 wt-% Co submicron cemented carbide powder was made by wet milling 390 g Co-powder (Umicore Halfmicron), 19,33 g Cr3C2 (H C Starck), 2580.5 g WC (H C Starck DS80), 10,22 g W metal powder, 14,6 g 2-pyrrolidinone, 1-ethenyl-, polymer with 1-triacontene (Antaron WP660 dispersant, M_{w}≈7000, from International Specialty Products Inc)., 300 mg 1-octyl-2-pyrrolidone (EasyWet 20 from International Specialty Products Inc.), 11,3 g Fischer-Tropsch wax and in 0,8 1 milling liquid consisting of ethanol and water (80:20 by weight) for 40 h. The resulting slurry was spraydried to a granulated powder. The dispersant, wetting agent and Fischer-Tropsch wax were added in this stage of the process to work as a granule forming agent, when spray drying the slurry. When the granulated powder is subsequently used for the manufacture of injection molding feedstock as described in Example 10, the included Antaron WP660 and EasyWet 20 will act as dispersant and wetting agent, respectively, for the inorganic powder mixture in the apolar organic binder of the feedstock.

### Example 6 (comparative)

The powder made in Example 1 was mixed by kneading 2500 g powder with 50,97 g low density polyethylene (LDPE, Borealis) and 50,97 g paraffin wax (Sasol Wax) in a Z-blade kneader mixer (Werner & Pfleiderer LUK 1,0). This resulted in a feedstock with a density of 8.23 g/ml, corresponding to a solids loading of 55,3 vol-%.

### Example 7 (Invention)

The powder made in Example 2 was mixed by kneading 2500 g powder with 50,97 g low density polyethylene (LDPE, Borealis) and 50,97 g paraffin wax (Sasol Wax) in a Z-blade kneader mixer (Werner & Pfleiderer LUK 1,0). This resulted in a feedstock with a density of 8.23 g/ml, corresponding to a solids loading of 55,3 vol-%.

### Example 8 (Invention)

The powder made in Example 3 was mixed by kneading 2500 g powder with 50,97 g low density polyethylene (LDPE, Borealis) and 50,97 g Paraffin wax (Sasol Wax) in a Z-blade kneader mixer (Werner & Pfleiderer LUK 1,0). This resulted in a feedstock with a density of 8.23 g/ml, corresponding to a solids loading of 55,3 vol-%. The time for the powder to form a viscous paste was considerably shorter in comparison with Examples 6 and 7.

### Example 9 (comparative)

The powder made in example 4 was mixed by kneading 2500 g powder with 50,97 g low density polyethylene(LDPE, Borealis) and 50,97 g Paraffin wax (Sasol Wax) in a Z-blade kneader mixer (Werner & Pfleiderer LUK 1,0). This resulted in a feedstock with a density of 8.23 g/ml, corresponding to a solids loading of 55,3 vol-%.

### Example 10 (invention)

The powder made in example 5 was mixed by kneading 2500 g powder with 50,97 g low density polyethylene(LDPE, Borealis) and 50,97 g Paraffin wax (Sasol Wax) in a Z-blade kneader mixer (Werner & Pfleiderer LUK 1,0). This resulted in a feedstock with a density of 8.23 g/ml, corresponding to a solids loading of 55,3 vol-%.

### Example 11 (comparative)

The feedstock made in example 6 was fed into an injection moulding machine (Battenfeld HM 60/130/22). The machine was used for the injection moulding of a Seco Tools Minimaster 10 mm endmill green body. The injection pressure was 73 MPa at an injection speed of 37 ml/s.

### Example 12 (invention)

The feedstock made in example 7 was fed into an injection moulding machine (Battenfeld HM 60/130/22). The machine was used for the injection moulding of a Seco Tools Minimaster 10 mm endmill green body. The injection pressure was 48 MPa at an injection speed of 37 ml/s.

### Example 13 (invention)

The feedstock made in example 8 was fed into an injection moulding machine (Battenfeld HM 60/130/22). The machine was used for the injection moulding of a Seco Tools Minimaster 10 mm endmill green body. The injection pressure was 47 MPa at an injection speed of 37 ml/s.

### Example 14 (comparative)

The feedstock made in example 9 was fed into an injection moulding machine (Battenfeld HM 60/130/22). The machine was used for the injection moulding of a Seco Tools Minimaster 10 mm endmill green body. The injection pressure was too high to achieve a acceptable green body.

### Example 15 (invention)

The feedstock made in example 10 was fed into an injection moulding machine (Battenfeld HM 60/130/22). The machine was used for the injection moulding of a Seco Tools Minimaster 10 mm endmill green body. The injection pressure was 88 MPa at an injection speed of 37 ml/s.

### Example 16 (invention)

The parts from example 11, parts from example 12 and the parts from example 13 were debound by extraction and sintered in a Sinter-HIP furnace (PVA COD733R) at 1420 °C with a total soaking time of 60 min. After 30 min at the peak hold temperature, the furnace pressure was raised to 3 MPa Ar.

After sintering, the parts were cut for inspection. The parts from example 11, example 12 and example 13 were both free from carbon pores, cracks, eta-phase and pores, i.e. A00 B00 C00 according to ISO 4505.

### Example 17 (comparative)

A WC-13 wt-% Co submicron cemented carbide powder was made by wet milling 390 g Co-powder (OMG extra fine), 19,33 g Cr3C2 (H C Starck), 2580.5 g WC (H C Starck DS80), 10,22 g W metal powder, 10 g stearic acid and 65 g paraffin wax (Sasol Wax) in 0,8 1 milling liquid consisting of n-hexane. The time needed to obtain a slurry suitable for spray drying was 32 h. The stearic acid is added in this stage of the process to work as a granule forming agent, when spray drying the slurry into a granulated powder, and also as a dispersant in the milling process.

### Example 18 (Invention)

A WC-13 wt-% Co submicron cemented carbide powder was made by wet milling 390 g Co-powder (OMG extra fine), 19,33 g Cr3C2 (H C Starck), 2580.5 g WC (H C Starck DS80), 10,22 g W metal powder, 65,3 g paraffin wax (Sasol Wax) and 9,7 g 2-pyrrolidinone, 1-ethenyl-, polymer with 1-triacontene (Antaron WP660, M_{w}≈7000, from International Specialty Products Inc.) in 0,8 1 milling liquid consisting of n-hexane. The time needed to obtain a slurry suitable for spray drying was 22 h. The dispersant is added in this stage of the process to work as a granulating agent, when spray drying the slurry into a granulated powder, and also as a dispersant in the milling process. The Fischer-Tropch wax is added in this stage of the process to work as a granule forming agent.

Examples 1-18 show that by using alkylated polyvinylpyrrolidone dispersants such as pyrrolidinone,1-ethenyl-, polymer with 1-triacontene for dispersions of metal carbide and cobalt powder mixtures in apolar media it was possible to obtain significantly improved processing properties of the dispersions. Powder dispersions in n-hexane showed a reduced viscosity at a given solids loading which resulted in shorter milling times for the production of free-flowing powders. Feedstock made from dispersions of metal carbide and cobalt powder mixtures in thermoplastic polymers and waxes showed a reduced injection molding pressure when using this type of dispersant and reduced processing times when using a combination of the dispersant with a 1-octyl-2-pyrrolidone wetting agent. The improvement of processing properties, especially the viscosity reduction of feedstock and the corresponding decrease in injection molding pressure, was the more pronounced the higher the cobalt powder surface area per unit volume dispersion.

## Claims

1. Method for dispersing a mixture of metal carbide and cobalt powders by mixing the powders in at least one apolar medium with a dispersant and possibly a wetting agent, **characterised in** using a dispersant which is suitable for dispersing both cobalt- and metal carbide powders.

2. Method according to claim 1 **characterised in that** said dispersant is a polymeric amphiphilic compound.

3. Method according to claim 1 **characterised in that** said dispersant is a polymeric dispersant with a branched copolymer architecture, preferably a copolymer with amphiphilic repeating units and grafted α-olefin moieties.

4. Method according to claim 2 **characterised in that** said dispersant is an alkylated polyvinylpyrrolidone having grafted α-olefin moieties with a C8 hydrocarbon chain length or longer, preferably C22-C40 , and most preferably 2-pyrrolidinone, 1-ethenyl-, polymer with 1-triacontene.

5. Method according to claim 2 **characterised in that** said dispersant has a molecular weight of 400-50000 g/mol, preferably 1000-20000 g/mol.

6. Method according to claim 1 **characterised in that** the added wetting agent is an amphiphilic compound with a molecular weight of 180-250 g/mol, preferably 1-octyl-2-pyrrolidone.

7. Method according to claim 1 **characterised in that** said metal carbides are carbides with elements from group 4,5,6 in the periodic chart of the elements, preferably, W, Ta, Nb, Ti.

8. Method according to claim 1 **characterised in that** said powder mixtures have a cobalt content of more than 9 per cent by weight.

9. Method according to claim 8 **characterised in that** the cobalt powder FSSS grain size is less than 2 µm, preferably less than 1 µm.

10. Method according to any of the proceeding claims **characterised in that** the powder mixture is used for further processing by injection molding, dry compaction or extrusion to make metal cutting tools.
